# EUROPÄISCHE PATENTANMELDUNG

(11) **EP 0 796 561 A1**
(43) Veröffentlichungstag der Anmeldung: **24.09.1997**
(21) Anmeldenummer: 97102178.7
(22) Anmeldetag: 12.02.1997
(51) Int. Cl.: A22C 17/04

(54) **Trennvorrichtung zur Trennung von miteinander vermischten fliessfähigen und nicht fliessfähigen Bestandteilen von Produkten**

(30) Priorität: 18.03.1996 DE 29605004 U
(71) Anmelder: NORDISCHER MASCHINENBAU RUD. BAADER GMBH + CO KG, 23560 Lübeck (DE)
(72) Erfinder: Kunig, Helmut, 23611 Bad Schwartau (DE)

(57) **Zusammenfassung**

Es ist eine Trennvorrichtung zum Trennen von miteinander vermischten fließfähigen und nicht fließfähigen Bestandteilen beispielsweise im Rahmen eines Recycling - Verfahrens von Packungen mit fließfähigen Nahrungsmittelprodukten beschrieben. Die Trennvorrichtung umfaßt eine perforierte Trommel (1) und ein umlaufendes Preßband (2), das gegen einen Teilbereich des Umfangs der Trommel anliegt, wobei die Produkte in einen Einlaufbereich (3) zwischen Trommel und Preßband eingeführt werden. Anordnung und Führung des Preßbandes sind so optimiert, daß die Verarbeitung unterschiedlichster Produkte mit hohem Wirkungsgrad erfolgt.

## Beschreibung

Die Erfindung bezieht sich auf eine Trennvorrichtung zur Trennung von miteinander vermischten fließfähigen und nicht fließfähigen Bestandteilen von Produkten mit einer im wesentlichen Zylindrischen, mit Ausnehmungen versehenen Trommel und einem umlaufenden Preßband, welches gegen einen Teilbereich des Umfangs der Trommel anliegt, wobei die Produkte in einen Einlaufbereich zwischen die Trommel und das Preßband eingeführt werden.

Trennvorrichtungen der genannten Art werden auf vielfältigen technischen Gebieten eingesetzt, beispielsweise um im Rahmen des Recycling fließfähige oder flüssige Bestandteile von Verpackungen zu separieren. Ein weiteres Anwendungsgebiet ist die Nahrungsmittelproduktion. Mit Hilfe der Tennvorrichtung ist es beispielsweise möglich, Fleisch von Knochen, Haut oder Sehnen zu separieren.

Aus dem Stand der Technik sind die unterschiedlichsten Ausgestaltungsformen von Trennvorrichtungen vorbekannt. So beschreibt beispielsweise die DE 38 44 301 A1 eine Trennmaschine, bei welcher zu verarbeitende Produkte einem im wesentlichen vertikal ausgerichteten Einlaufbereich zugeführt werden. Die Produkte werden mit Hilfe des umlaufenden Preßbandes gegen die Lochtrommel gedrückt. Hierbei unterstützt zwar der Schwerkrafteinfluß den Einlauf der Produkte, die Praxis zeigt jedoch, daß dieser Effekt nicht ausreicht, um unter allen Betriebsbedingungen eine zuverlässige Funktion der Trennmaschine zu gewährleisten.

Eine ähnliche Vorrichtung ist als Passiermaschine zum Gewinnen von Fleisch in der DE-PS 21 59 465 beschrieben.

Der Erfindung liegt die Aufgabe zugrunde, eine Trennvorrichtung der eingangs genannten Art zu schaffen, welche bei einfachem Aufbau und betriebssicherer Handhabbarkeit die Verarbeitung unterschiedlichster Produkte mit hohem Wirkungsgrad ermöglicht.

Erfindungsgemäß wird die Aufgabe somit durch deine Trennvorrichtung zur Trennung von miteinander vermischten fließfähigen und nicht-fließfähigen Bestandteilen von Produkten gelöst, mit einer im wesentlichen zylindrischen, mit Ausnehmungen versehenen Trommel und einem umlaufenden Preßband, welches gegen einen Teilbereich des Umfangs der Trommel anliegt, wobei die Produkte in einen Einlaufbereich zwischen die Trommel und das Preßband einführbar sind, dadurch gekennzeichnet, daß das Preßband im Einlaufbereich geradlinig angeordnet ist und einen Neigungswinkel gegen die Horizontale in einem Bereich von 15 bis 25° aufweist und daß das Preßband die Trommel mit einem Umschlingungsbogenmaß in einem Bereich von 170 bis 200 mm umgreift.

Die Lösung der Aufgabe erfolgt somit durch eine Zuordnung des Neigungswinkels des Preßbandes im Einlaufbereich und des Umschlingungsbogenmaßes des Preßbandes um die Trommel. Erfindungsgemäß ergeben sich durch die vorgesehenen Winkelbereiche eine Reihe erheblicher Vorteile. Der Neigungswinkel des Preßbandes im Einlaufbereich beeinflußt die Anhäufung des zu verarbeitenden Produktes vor dem Einlauf in den Spalt zwischen der Trommel und dem Preßband. Der angegebene Winkelbereich verbessert die Annahme der Produkte und gewährleistet einen gleichmäßigen, ungestörten Einzug der Produkte. Dieser wird nicht dadurch beeinträchtigt, daß die Produkte in unerwünschter Weise vorab mit der Trommel in Kontakt kommen.

Durch den angegebenen Bereich des Umschlingungswinkels (im Bogenmaß) wird in Abstimmung mit den Einlaufbedingungen sichergestellt, daß eine ausreichende Quetschzeit der Produkte zwischen dem Preßband und der Trommel möglich ist. Hierdurch werden fließfähige oder flüssige Bestandteile der Produkte in den Innenraum der Trommel überführt.

Bei dem Umschließungsbogenmaß des Preßbandes haben sich Bogenmaßbereiche von 170 mm bis 210 mm als besonders wirkungsvoll erwiesen.

Bei der beschriebenen Trennvorrichtung erweist es sich als besonders günstig, wenn die Umfangsgeschwindigkeit der Trommel und die Umfangsgeschwindigkeit der im Auslaufbereich der Produkte angeordneten Andruckwalze so aufeinander abgestimmt sind, daß die Umfangsgeschwindigkeit der Trommel größer ist, als die Umfangsgeschwindigkeit der Andruckwalze. Hierdurch können Dickenveränderungen des Preßbandes so kompensiert werden, daß sich unter größtmöglicher Schonung des Preßbandes ein maximierter Wirkungsgrad ergibt. Dies ist insbesondere deshalb von Wichtigkeit, weil das Preßband ein Verschleißteil ist, dessen Kosten die Betriebskosten der Tennvorrichtung beeinflussen.

Besonders vorteilhaft ist es, wenn die Umfangsgeschwindigkeit der Trommel um einen Faktor in einem Bereich zwischen 1,01 und 1,04 größer ist, als die Umfangsgeschwindigkeit der Andruckwalze.

Zur Einstellung der durch die Andruckwalze aufgebrachten Kraft erweist es sich als besonders günstig, wenn die Andruckwalze auf einem Exzenter gelagert ist. Durch diese Art der Lagerung kann die Andruckwalze stufenlos eingestellt werden. Diese Einstellung kann auch während des Betriebs der Trennvorrichtung oder nach entsprechenden Betriebszeiten des Preßbandes durch eine Bedienungsperson durchgeführt werden, ohne daß hierzu komplizierte und fehlerbehaftete Arbeitsschritte erforderlich wären. Durch die Lagerung der Andruckwalze mittels eines Exzenters ist sichergestellt, daß die Achse der Andruckwalze stets exakt parallel zur Achse der Trommel geführt ist. Mittels einer hydraulischen Federung ist es weiterhin möglich, die Andruckwalze so gegen die Trommel vorzuspannen, daß Ausweichbewegungen der Andruckwalze möglich sind und diese somit federnd gelagert ist.

Die Spannung des Preßbandes erfolgt bevorzugterweise mittels einer hydraulisch einstellbaren Umlenkwalze, welche die Funktion einer Spannwalze erfüllt und um welche das Preßband geführt ist. Die Umlenkwalze kann erfindungsgemäß in einem Rücklaufbereich des umlaufenden Preßbandes angeordnet sein, so daß der Arbeitsbereich des Preßbandes durch die Verstellvorrichtung nicht beeinflußt wird.

Unterhalb der Trommel ist das Preßband bevorzugterweise durch Stützwalzen abgestützt, welche in günstiger Weiterbildung eine Rollenbahn bilden können. Die Abstützung des Preßbandes erfolgt, um dessen Lage relativ zu der Trommel zu stabilisieren und um zusätzlich auch in diesem Bereich der Trommel, in welchem diese von dem Anpreßband umschlungen wird, einen ausreichenden Arbeitsdruck aufbauen zu können.

Der Wirkungsgrad der Trennvorrichtung wird auch dadurch gesteigert, daß die Rollenbahn mit seitlichen Kufen (Preßbögen) versehen ist, welche zur Abstützung der Produkte dienen. Bei Betrieb der Trennvorrichtung bildet Passiergut an der Einlaufstelle auf dem Umfang der Trommel unter Abheben des Preßbandes ein Materialband. Dieses wird durch die Stützwalzen egalisiert und erfährt zwischen den Stützwalzen und der Andruckwalze eine Erhöhung des auf das Passiergut-Materialband wirkenden Drucks. Dieser Druck wirkt in diesem Bereich auf das Preßband ausbeulend und hat zur Folge, daß das Preßband sich auch mit seinen Randzonen von der Trommel abheben will. Infolge der Stützwirkung der Stützwalzen und der seitlichen Kufen (Preßbögen) wird dies jedoch verhindert. Gleichzeitig werden durch den vor den Stützwalzen bzw. der ersten Stützwalze angeordneten Einlaufbogen der Kufenstützkräft am Preßband erzeugt, die einem Abheben des Preßbandes im Bereich zwischen den Stützwalzen und der Andruckwalze entgegenwirken. Ein seitliches Austreten der Produkte aus Randbereichen der Kontaktzone zwischen dem Andruckband und der Trommel wird somit weitgehend vermieden.

Zur Lösung von anhaftenden festen Teilen der Produkte von der Trommel ist im Auslaufbereich der Produkte ein gegen die Trommel anliegendes Messer vorgesehen, welches gefedert und schwimmend gelagert sein kann. Mit Hilfe des Messers werden Produktreste von der Trommel abgeschabt, so daß diese im Einlaufbereich der Produkte eine weitgehend saubere Oberfläche aufweist.

Zum Antrieb der Trommel und der Andruckwalze dient bevorzugterweise eine Antriebskette. Zusätzlich zu der Möglichkeit, hohe Kräfte schlupffrei zu übertragen, weist ein derartiger Kettentrieb den Vorteil auf, daß die Verstellbarkeit der Andruckwalze durch den Antrieb nicht beeinflußt wird.

Erfindungsgemäß ist vorgesehen, daß die Trommel, die Andruckwalze, die Stützwalzen, die Umlenkwalze, weitere Umlenkwalzen sowie der zugehörige Antrieb an einem Maschinengestell gelagert sind. Das umlaufende Preßband kann somit, ebenso wie die Trommel, in einfachster Weise aus- bzw. eingebaut werden. Um während des Betriebes eine ausreichende Stabilisierung der Trommel und der Walzen zu gewährleisten, ist eine Frontplatte vorgesehen, welche lösbar gelagert ist. Da diese Frontplatte ein erhebliches Gewicht aufweist, ist erfindungsgemäß vorgesehen, daß die Frontplatte um eine vertikale Achse verschwenkbar gelagert ist. Die Bedienungsperson braucht somit die Frontplatte lediglich, ähnlich einer Tür auf- bzw. zuschwenken, zusätzliche Maßnahmen zur Handhabung der schweren Frontplatte und der an dieser vorgesehenen Anbauten können gänzlich entfallen. Somit vereinfacht sich die Handhabung der Trennvorrichtung in erheblichem Maße.

Besonders günstig ist es, daß an der Frontplatte die Stützlager angeordnet sein können, mit Hilfe derer die Trommel und die Andruckwalze abgestützt sind. Durch die erfindungsgemäße Lagerung der Frontplatte beeinflussen die zusätzlichen Stützlager nicht die Bedienbarkeit der Trennvorrichtung.

Weiterhin ist es günstig, wenn die Frontplatte mittels zusätzlicher Stützträger lösbar an dem Maschinengestell befestigt ist, damit das Scharnier der Frontplatte von den während des Betriebs auftretenden Kräften entlastet ist.

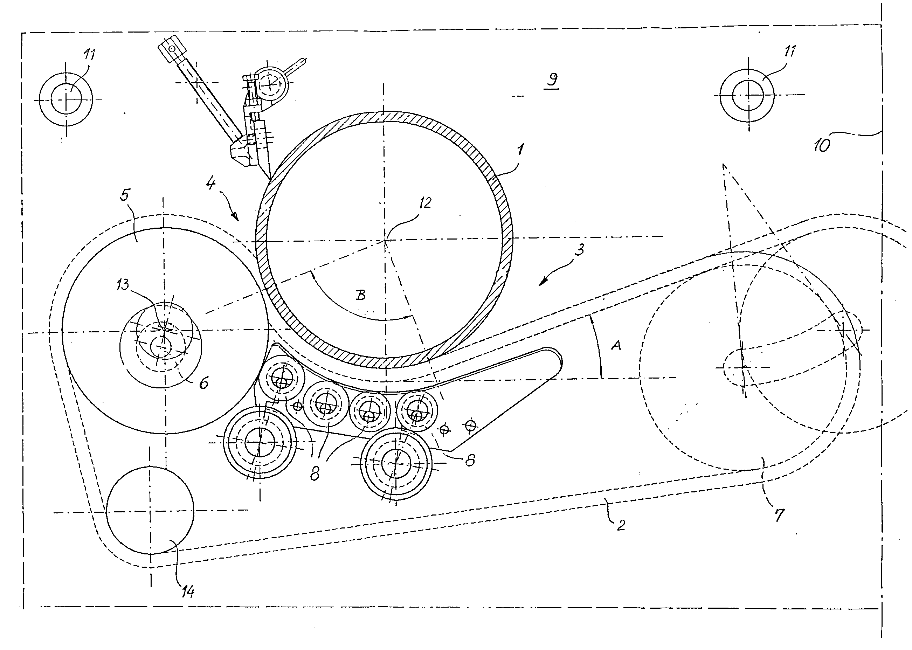

Im folgenden wird die Erfindung anhand eines Ausführungsbeispiels in Verbindung mit der Zeichnung beschrieben. Dabei zeigt die einzige Zeichnung eine schematische Teil-Ansicht des Arbeitsbereichs der Trennvorrichtung.

In der Fig. wurde aus Gründen der Übersichtlichkeit darauf verzichtet, das Maschinengestell im einzelnen darzustellen, die Fig. zeigt deshalb in Frontansicht lediglich den Arbeitsbereich der erfindungsgemäßen Trennvorrichtung. In gestrichelten Linien ist dabei schematisch eine Frontplatte 9 gezeigt, welche im eine vertikale Schwenkachse 10 verschwenkbar ist. Sowohl die Größe der Frontplatte 9 als auch die Lage der vertikalen Achse 10 sind lediglich schematisch dargestellt.

Die erfindungsgemäße Trennvorrichtung umfaßt eine zylindrische Trommel 1, welche an ihrem Umfang mit Ausnehmungen, beispielsweise Bohrungen versehen ist. Die Trommel 1 ist um eine horizontale Achse 12 drehbar an dem Maschinengestell gelagert.

Die Trennvorrichtung umfaßt weiterhin eine Andruckwalze 5, welche ebenfalls um eine horizontale Achse 13 drehbar an dem Maschinengestell gelagert ist. Mittels eines Exzenters 6 ist die Lage der Andruckwalze 5 einstellbar, die Figur zeigt eine Ausgangsstellung, in welcher die Andruckwalze 5 vollständig gegen die Trommel 1 vorgespannt ist.

Sowohl die Trommel 1 als auch die Andruckwalze 5 werden mittels eines gemeinsamen Antriebes, beispielsweise eines Kettentriebs angetrieben, die Trommel 1 dreht sich im Uhrzeigersinn, während die Andruckwalze 5 im Gegenuhrzeigersinn drehbar ist.

Weiterhin umfaßt die Trennvorrichtung ein umlaufendes Band 2, welches aus einem elastischen Werkstoff gefertigt ist. Das Preßband 2 liegt gegen einen Teil des Umfangs der Trommel 1 an, dieser Umfangsbereich der Trommel wird durch ein Umschlingungsbogenmaß B definiert. Weiterhin umläuft das Preßband 2 die Andruckwalze 5, eine Stützwalze 14 und eine als Spannwalze ausgebildete Umlenkwalze 7. Die Umlenkwalze 7 ist in ihrer Lage hydraulisch verstellbar (nicht dargestellt), um eine ausreichende Bandspannung aufzubringen.

Die Lage der Spannwalze 7 ist so gewählt, daß das Preßband 2 in einem geradlinig laufenden Teilbereich gegen die Trommel 1 geführt wird, welcher einen Einlaufbereich 3 bildet. Die Neigung des Preßbandes 2 zur Horizontalen ist als Neigungswinkel A dargestellt.

Unterhalb der Trommel 1 sind mehrere Stützwalzen 8 drehbar gelagert, welche eine Rollenbahn bilden.

Der Übergangsbereich des Preßbandes 2 von der Trommel 1 zu der Andruckwalze 5 ist als Auslaufbereich 4 dargestellt.

Die Fig. zeigt weiterhin mehrere Stützträger 11, welche zur Lagerung der Frontplatte 9 im geschlossenen Zustand dienen. Ein Teil der Stützträger 11 kann Ausnehmungen der Frontplatte 9 durchgreifen und beispielsweise über Muttern mit der Frontplatte 9 verschraubt werden. In gleicher Weise ist die Frontplatte 9 an der Achse 13 der Andruckwalze 5 gelagert.

Es sind zusätzliche weitere Lagerungen der Frontplatte 9 möglich, um den Arbeitsbereich der Trennvorrichtung fest zu begrenzen und dabei die Frontplatte 9 so zu fixieren, daß diese den freien, auskragenden Bereich der Trommel 1 sowie der Andruckwalze 5 lagern kann. Es versteht sich, daß auch die anderen Walzen 7, 8 und 14 jeweils an ihren freien Enden an der Frontplatte gelagert sind.

Durch die Verschwenkbarkeit der Frontplatte 9 um die Achse 10 ist diese ähnlich einer Tür zu öffnen, so daß die Trommel 1 und das Preßband 2 aus- bzw. eingebaut werden können. Bei geöffneter Frontplatte 9 ist weiterhin der Arbeitsbereich der Trennvorrichtung leicht zu reinigen.

Die Arbeitsweise der erfindungsgemäßen Trennvorrichtung ist wie folgt: Die zu verarbeitenden Produkte werden dem Einlaufbereich 3 zugeführt, beispielsweise mittels eines Trichters, einer Fördereinrichtung oder auf ähnliche Weise. Durch die Bewegung des Preßbandes 2 und die Bewegung der Trommel 1 werden die Produkte in den Spalt zwischen der Trommel 1 und dem Preßband 2 eingezogen und im Bereich des Umschlingungs-Bogenmaß B gegen die Trommel 1 gepreßt. Hierdurch werden die fließfähigen oder flüssigen Bestandteile der Produkte durch die Ausnehmungen der Trommel 1 gepreßt. Die verbleibenden Teile der Produkte verlassen in dem Auslaufbereich 4 die Trommel 1 und werden mittels des über die Andruckwalze 5 verlaufenden Bereichs des Preßbandes 2 restlich aus dem Arbeitsbereich der Trennvorrichtung gefördert. Zusätzlich können Leitelemente, Abstreifer, etc. vorgesehen sein.

Die Erfindung ist nicht auf das gezeigte Ausführungsbeispiel beschränkt, vielmehr ergeben sich im Rahmen der Erfindung vielfältige Abwandlungs- und Modifikationsmöglichkeiten.

## Patentansprüche

1. Trennvorrichtung zur Trennung von miteinander vermischten fließfähigen und nicht-fließfähigen Bestandteilen von Produkten, mit einer im wesentlichen zylindrischen, mit Ausnehmungen versehenen Trommel (1) und einem umlaufenden Preßband (2), welches gegen einen Teilbereich des Umfangs der Trommel (1) anliegt, wobei die Produkte in einen Einlaufbereich (3) zwischen die Trommel (1) und das Preßband (2) einführbar sind, dadurch gekennzeichnet, daß das Preßband (2) im Einlaufbereich (3) geradlinig angeordnet ist und einen Neigungswinkel (A) gegen die Horizontale in einem Bereich von 15 bis 25° aufweist und daß das Preßband (2) die Trommel (1) mit einem Umschlingungsbogenmaß (B) in einem Bereich von 170 bis 200 mm umgreift.

2. Trennvorrichtung nach Anspruch 1, dadurch gekennzeichnet, daß das Preßband (2) im Auslaufbereich (4) der Produkte um eine Andruckwalze (5) geführt ist, daß die Andruckwalze (5) und die Trommel (1) mit einem Antrieb verbunden sind und daß die durch den Antrieb bestimmte Umfangsgeschwindigkeit der Trommel (1) größer ist, als die Umfangsgeschwindigkeit der Andruckwalze (5).

3. Trennvorrichtung nach Anspruch 2, dadurch gekennzeichnet, daß die Umfangsgeschwindigkeit der Trommel (1) um einen Faktor in einem Bereich von 1,01 bis 1,04 größer ist als die Umfangsgeschwindigkeit der Andruckwalze (5).

4. Trennvorrichtung nach einem der Ansprüche 1 bis 3, dadurch gekennzeichnet, daß die Andruckwalze (5) einstellbar auf einem Exzenter (6) gelagert ist.

5. Trennvorrichtung nach einem der Ansprüche 1 bis 4, dadurch gekennzeichnet, daß das Preßband (2) um eine hydraulisch einstellbare Umlenkwalze (7) geführt ist.

6. Trennvorrichtung nach einem der Ansprüche 1 bis 5, dadurch gekennzeichnet, daß das Preßband (2) in einem Bereich unterhalb der Trommel (1) durch Stützwalzen (8) abgestützt ist.

7. Trennvorrichtung nach Anspruch 6, daß die Stützwalzen (8) eine Rollenbahn bilden und daß die Rollenbahn mit seitlichen Kufen zur Abstützung der Produkte versehen ist.

8. Trennvorrichtung nach einem der Ansprüche 1 bis 7, dadurch gekennzeichnet, daß im Auslaufbereich (4) der Produkte ein gegen die Trommel (1) anliegendes, gefedert schwimmend gelagertes Messer angeordnet ist.

9. Trennvorrichtung nach einem der Ansprüche 2 bis 8, dadurch gekennzeichnet, daß der Antrieb der Trommel (1) und der Andruckwalze (5) eine Antriebskette umfaßt.

10. Trennvorrichtung nach einem der Ansprüche 1 bis 9, dadurch gekennzeichnet, daß an einem Maschinengestell zur Abdeckung insbesondere des Arbeitsbereichs des Preßbandes (2) und der Trommel (1) und zur Lagerung der entsprechenden Bauelemente eine Frontplatte (9) gelagert ist, welche um eine vertikale Achse (10) verschwenkbar ist.

11. Trennvorrichtung nach Anspruch 10, dadurch gekennzeichnet, daß der auskragende Bereich der Trommel (1) und der Andruckwalze (5) mittels Stützlagern an der Frontplatte (9) lösbar gelagert sind.

12. Trennvorrichtung nach Anspruch 11, dadurch gekennzeichnet, daß die Stützlager einstellbar ausgebildet sind.

13. Trennvorrichtung nach einem der Ansprüche 10 bis 12, dadurch gekennzeichnet, daß die Frontplatte (9) mittels Stützträgern (11) lösbar an dem Maschinengestell befestigt ist.
